# EUROPEAN PATENT APPLICATION

(11) **EP 4 841 728 A2**
(43) Date of publication of application: **18.11.2026**
(21) Application number: 26208892.5
(22) Date of filing: 19.10.2023
(51) Int. Cl.: H01M 10/04

(54) **MOLDING APPARATUS AND METHOD, AND POUCH TYPE BATTERY CASE MOLDED THERETHROUGH**

(30) Priority: 21.10.2022 KR 20220136748
(62) Document number(s) of the earlier application(s) in accordance with Art. 76 EPC: 23880271.4 / 4 596 204
(71) Applicant: LG Energy Solution, Ltd., Seoul 07335 (KR)
(72) Inventor: CHO, Sung Woo, 34122 DAEJEON (KR); LEE, Chung Hee, 34122 DAEJEON (KR); PARK, Dong Hyeuk, 34122 DAEJEON (KR); KANG, Tae Won, 34122 DAEJEON (KR); HONG, Jeong Woo, 34122 DAEJEON (KR)
(74) Representative: Plasseraud IP

(57) **Abstract**

A molding apparatus according to an embodiment of the present invention may mold a pouch film. The molding apparatus may include: a die in which a first opening is defined; a stripper disposed above the die to fix the pouch film and having a second opening; a sub die having a height that is variable with respect to the die inside the first opening; a punch configured to press the pouch film through the second opening and disposed to face the sub die; and a sub punch configured to press the pouch film between an inner circumference of the first opening and an outer circumference of the sub die through a space between an inner circumference of the second opening and an outer circumference of the punch.

## Description

### TECHNICAL FIELD

### CROSS-REFERENCE TO RELATED APPLICATION

The present application claims the benefit of the priority of Korean Patent Application No. 10-2022-0136748, filed on October 21, 2022, which is hereby incorporated by reference in its entirety.

### TECHNICAL FIELD

The present invention relates to a molding apparatus and method for molding a pouch film, and a pouch-type battery case molded therethrough.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch-type secondary battery and a can-type secondary battery according to a material of a case accommodating the electrode assembly. In the pouch-type secondary battery, an electrode assembly is accommodated in a pouch made of a flexible polymer material. Also, in the can-type secondary battery, an electrode assembly is accommodated in a case made of a metal or plastic material.

In general, a pouch-type battery case is manufactured by performing press processing on a pouch film having flexibility to form a cup part. In addition, when the cup part is formed, an electrode assembly is accommodated in the cup part, and then, a side of the cup part is sealed to manufacture a secondary battery.

In general, in the press processing, drawing molding is performed by inserting a pouch film between a die and a stripper and applying a pressure to the pouch film by using a punch to stretch the pouch film.

However, in the method according to the related art, when the cup part is molded, there is a risk of cracks occurring in the pouch film, and there is a limitation in that a depth of the cup part increases.

### DISCLOSURE OF THE INVENTION

### TECHNICAL PROBLEM

An object of the present invention is to provide a molding apparatus and method, which are capable of deeply molding a cup part in a pouch film by dividing the molding process into multiple times.

Another object of the present invention is to provide a pouch type battery case that is manufactured through the molding apparatus or method.

### TECHNICAL SOLUTION

A molding apparatus according to an embodiment of the present invention may mold a pouch film. The molding apparatus may include: a die in which a first opening is defined; a stripper disposed above the die to fix the pouch film and having a second opening; a sub die having a height that is variable with respect to the die inside the first opening; a punch configured to press the pouch film through the second opening and disposed to face the sub die; and a sub punch configured to press the pouch film between an inner circumference of the first opening and an outer circumference of the sub die through a space between an inner circumference of the second opening and an outer circumference of the punch.

The sub punch may be configured to primarily press the pouch film in a state in which a top surface of the sub die and a top surface of the die are disposed on the same plane, and the punch and the sub punch may be configured to secondarily press the pouch film in a state in which the top surface of the sub die is disposed below the top surface of the die.

The sub punch may be disposed to surround the outer circumference of the punch.

A protrusion protruding from the inner circumference of the first opening toward the outer circumference of the sub die and overlapping the sub punch in a vertical direction may be disposed on the die.

A molding apparatus according to an embodiment of the present invention may be performed to mold a pouch film. A molding method may include: fixing the pouch film between a die, in which a first opening is formed, and a stripper, in which a second opening is formed; allowing a sub punch to primarily press the pouch film through the second opening between an outer circumference of a sub die disposed in the first opening and an inner circumference of the first opening; and allowing a punch disposed to face the sub die with the pouch film therebetween to secondarily press the pouch film toward the first opening through the second opening together with the sub punch.

In the fixing and/or the primary pressing, a top surface of the sub die may be disposed on the same plane as a top surface of the die.

In the fixing and/or the primary pressing, the pouch film may be fixed between the sub die and the punch.

In the secondary pressing, a bottom surface of the punch may be disposed on the same plane as a bottom surface of the sub punch.

In the primary pressing, the sub punch may mold a recess part having a first depth in the pouch film, and in the secondary pressing, the punch and the sub punch may mold a cup part having a second depth greater than the first depth in the pouch film.

In the secondary pressing, the recess part may be spread to be molded into the cup part.

A protrusion protruding from an inner circumference of the first opening toward an outer circumference of the sub die may be formed on the die. In the secondary pressing, the sub punch may press the pouch film to a depth at which the pouch film is in contact with the protrusion.

In the secondary pressing, a top surface of the sub die may be disposed on the same plane as a top surface of the protrusion.

A pouch type battery case according to an embodiment of the present invention may include: a cup part having a recessed shape; and a terrace disposed on a circumference of the cup part. A circumferential portion of the cup part may include: a first circumferential portion connected to the terrace through a die edge; and a second circumferential portion connected to the first circumferential portion and having a thickness less than that of the first circumferential portion.

A base portion of the cup part may include: a first base portion disposed at a center thereof; and a second base portion having a thickness less than that of the first base portion and connected to the circumferential portion of the cup part through a punch edge.

A thickness of the second circumferential portion may be less than that of the second base portion.

A thickness of the first circumferential portion may be less than that of the first base portion.

A thickness of the punch edge connecting the second circumferential portion to the second base portion may be the same as that of the second base portion or the second circumferential portion.

A thickness of the punch edge connecting the second circumferential portion to the second base portion may be the same as that of the second circumferential portion and less than that of the second base portion.

A thickness of the punch edge connecting the second circumferential portion to the second base portion may be the same as that of the second base portion and greater than that of the second circumferential portion.

The circumferential portion of the cup part may further include a third circumferential portion connected to the second circumferential portion and having a thickness greater than that of the second circumferential portion. A thickness of the punch edge connecting the third circumferential portion to the second base portion may be the same as that of each of the third circumferential portion and the second base portion and greater than that of the second circumferential portion.

### ADVANTAGEOUS EFFECTS

According to the preferred embodiment of the present invention, the deep cup part may be molded without the cracks occurring in the pouch film. In more detail, according to the related art, since the cup part is molded by the pressing once, only the specific area of the pouch film may be excessively stretched, and thus, the depth of the cup part may be limited to prevent the cracks from occurring. On the other hand, in the present invention, since the molding process is performed several times so that the area of the pouch film, which is not stretched in the related art, is also stretched, there may be the advantage in that the cup part is molded more deeply.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a schematic view of a molding apparatus according to an embodiment of the present invention.
FIGS. 2 to 5 are schematic view successively illustrating operations of the molding apparatus according to an embodiment of the present invention.
FIG. 6 is a flowchart of a molding method according to another embodiment of the present invention.
FIG. 7 is a schematic view illustrating a process of manufacturing a pouch type battery case according to further another embodiment of the present invention.
FIG. 8 is a cross-sectional view of the pouch type secondary battery according to an embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

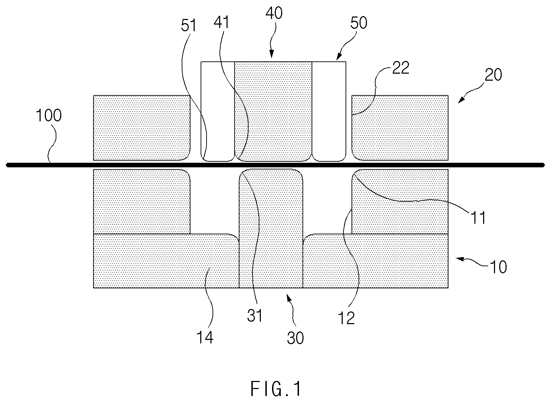

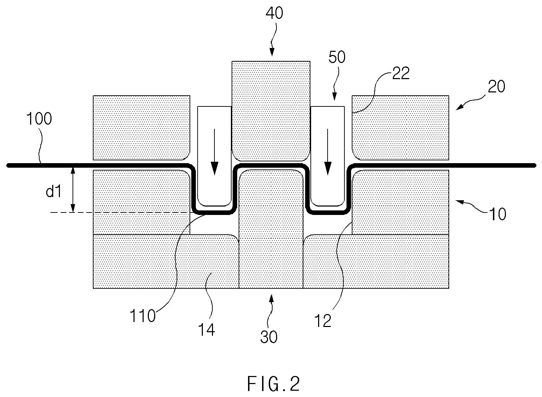

FIG. 1 is a schematic view of a molding apparatus according to an embodiment of the present invention, and FIGS. 2 to 5 are schematic view successively illustrating operations of the molding apparatus according to an embodiment of the present invention.

The molding apparatus according to an embodiment of the present invention may mold a pouch film 100. The pouch film 100 may have a predetermined thickness. The pouch film 100 may be a laminated sheet having moldability. In more detail, the pouch film 100 may be a laminated sheet in which a pair of resin layers disposed at both the outermost surfaces and a metal layer disposed between the pair of resin layers are laminated.

The molding apparatus according to an embodiment of the present invention may include a die 10, a stripper 20, a sub die 30, a punch 40, and a sub punch 50.

Some of the die 10, the stripper 20, the sub die 30, the punch 40, and the sub-punch 50 may be configured to be elevated with respect to other parts. For example, any one of the die 10, the stripper 20, the sub die 30, the punch 40, and the sub punch 50 may be fixed, and the others may be configured to be independently elevated with respect to the any one. As another example, each of the die 10, the stripper 20, the sub die 30, the punch 40, and the sub punch 50 may be configured to be independently elevated.

The die 10 may be disposed below the pouch film 100. A first opening 12 may be defined in the die 10. The first opening 12 may be defined downward from a top surface of the die 10. The first opening 12 may be a molding space in which the pouch film 100 is recessed. In addition, the first opening 12 may be a space in which the sub die 30, which will be described later, is disposed.

A cross-section of the first opening 12 may have an approximately square shape, but is not limited thereto.

A rounded edge 11 may be defined on the die 10. In more detail, the top surface of the die 10 and an inner circumference of the first opening 12 may be connected to each other by the rounded edge 11. The edge 11 may have a predetermined curvature radius. The edge 11 may be provided to be rounded to prevent a portion that is in close contact with the edge 11 from being broken when the pouch film 100 is stretched into the first opening 12.

A protrusion 14 protruding inward from the inner circumference of the first opening 12 may be disposed on the die 10. The protrusion 14 may protrude toward an outer circumference of the sub die 30.

The protrusion 14 may overlap the sub punch 50 in a direction perpendicular to the sub punch 50, which will be described later. Thus, the protrusion 14 may function as a limiter that limits descent of the sub punch 50.

The protrusion 14 may be disposed at a position spaced a predetermined distance downward from the top surface of the die 10. As illustrated in FIG. 1, the die 10 may include a lower body, of which an inner portion defines the protrusion 14, and an upper body that is disposed at an upper side of the lower body and in contact with the pouch film 100. However, it is not limited thereto, and the configuration of the die may vary depending on needs. For example, the die 10 may be provided in one body.

The stripper 20 may face the die 10 with the pouch film 100 therebetween. The stripper 20 may fix the pouch film 100 at an upper side of the die 10.

In more detail, at least one of the die 10 or the stripper 20 may be configured to be elevated, and a gap between the die 10 and the stripper 20 may be variable. The pouch film 100 may be inserted between the die 10 and the stripper 20 when the die 10 and the stripper 20 are spaced apart from each other, and then, when the die 10 and the stripper 20 approach each other, the pouch film 100 may be fixed between the die 10 and the stripper 20. That is, the pouch film 100 may be fixed between the top surface of the die 10 and a bottom surface of the stripper 20.

A second opening 22 may be defined in the stripper 20. The second opening 22 may be defined to pass upward from the bottom surface of the stripper 20. The second opening 22 may be a space in which the punch 40 and sub punch 50, which will be described later, are disposed.

A cross-section of the second opening 22 may have an approximately square shape, but is not limited thereto. The second opening 22 may be disposed above the first opening 12. The second opening 22 and the first opening 12 may face each other with the pouch film 100 therebetween.

A height of the sub die 30 relative to the die 10 within the first opening 12 may be variable. In more detail, at least one of the die 10 or the sub die 30 may be configured to be elevated, and a height difference between the top surface of the die 10 and the top surface of the sub die 30 may be variable.

A rounded edge 31 may be disposed on the sub die 30. In more detail, the top surface and the outer circumference of the sub die 30 may be connected to each other by the rounded edge 31. The edge 31 may have a predetermined curvature radius. The edge 31 may be provided to be rounded to prevent a portion that is in close contact with the edge 31 from being broken when the pouch film 100 is stretched into the first opening 12.

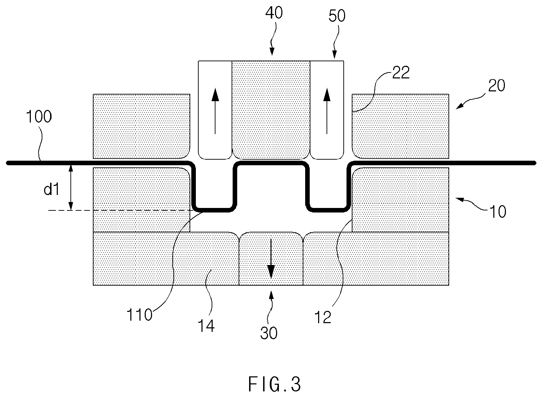

Referring to FIGS. 2 and 3, in primary molding in which the sub punch 50 presses the pouch film 100, the sub die 30 may fix the pouch film 100 together with the punch 40. In more detail, when the sub punch 50 presses the pouch film 100, a central portion of the pouch film 100 may be fixed between the bottom surface of the punch 40 and the top surface of the sub die 30.

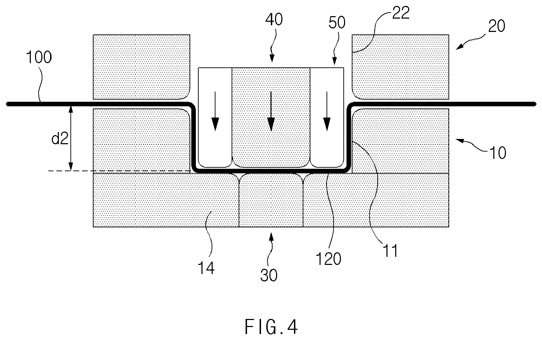

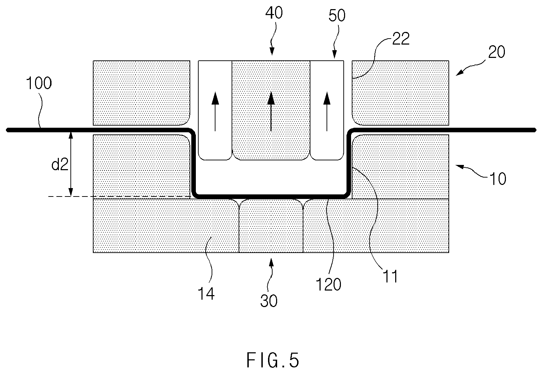

Referring to FIGS. 4 and 5, in secondary molding in which the punch 40 and the sub punch 50 press together to press the pouch film 100, the top surface of the sub die 30 may be disposed below the top surface of the die 10. In more detail, when the punch 40 and the sub punch 50 together press the pouch film 100, the top surface of the sub die 30 may be disposed on the same plane as the top surface of the protrusion 14. Here, the sub die 30 may function as a limiter that limits the descent of the punch 40.

The punch 40 may press the pouch film 100 through the second opening 22. A height of the punch 40 relative to the sub die 30 within the second opening 22 may be variable. In more detail, at least one of the punch 40 and the sub die 30 may be configured to be elevated, and a height difference between the bottom surface of the punch 40 and the top surface of the sub die 30 may be variable.

A rounded edge 41 may be disposed on the punch 40. In more detail, the outer circumference and the bottom surface of the punch 40 may be connected to each other by the rounded edge 41. The edge 41 may have a predetermined curvature radius. The edge 41 may be provided to be rounded to prevent a portion that is in close contact with the edge 41 from being broken when the punch 40 presses the pouch film 100.

As described above, in the primary molding, the punch 40 may fix the pouch film 100 together with the sub die 30, and in the secondary molding, the punch 40 may press the pouch film 100 together with the sub punch 50. In more detail, the punch 40 may press the pouch film 100 while descending toward the sub die 30.

The sub punch 50 may press the pouch film 100 through the second opening 22. In more detail, the sub punch 50 may press the pouch film 100 between the inner circumference of the first opening 12 and the outer circumference of the sub die 30through a space between the inner circumference of the second opening 22and the outer circumference of the punch 40.

The sub punch 50 may face the protrusion 14 of the die 10 in a vertical direction. The sub punch 50 may be disposed to surround the outer circumference of the punch 40. The sub punch 50 may be disposed between the outer circumference of the punch 40 and the inner circumference of the second opening 22. That is, the outer circumference of the sub punch 50 may face the inner circumference of the second opening 22, and the inner circumference of the sub punch 50 may face the outer circumference of the punch 40.

The sub punch 50 may be elevated independently of the punch 40. A height of the sub punch 50 relative to the die 10 within the second opening 22 may be variable. In more detail, at least one of the sub punch 50 or the die 10 may be configured to be elevated, and a height difference between the bottom surface of the sub punch 50 and the top surface of the die 10 may be variable.

A rounded edge 51 may be disposed on the sub punch 50. In more detail, the outer circumference and inner circumference of the sub punch 50 may be connected to the bottom surface by the rounded edge 45. The edge 51 may have a predetermined curvature radius. Alternatively, the bottom surface of the sub punch 50 may be provided to be rounded. As a result, when the sub punch 50 presses the pouch film 100, the portion of the pouch film 100 that is in close contact with the edge 51 or the bottom surface of the sub punch 50 may be prevented from being broken.

In the primary molding, the sub punch 50 may mold the pouch film 100 to a first depth d1. In the secondary molding, the punch 40 and the sub punch 50 may mold the pouch film 100 to a second depth d2 that is greater than the first depth d1.

Hereinafter, the operation of the molding apparatus according to an embodiment of the present invention will be described. In addition, for convenience of explanation, hereinafter, a case in which the die 10 is fixed, and each of the stripper 20, the sub die 30, the punch 40, and the sub punch 50 is elevated independently will be described as an example.

Referring to FIG. 1, in a state in which the pouch film 100 enters between the die 10 and the stripper 20, the stripper 20 descends toward the die 10, and a portion of the outside of the pouch film 100 may be fixed between the stripper 20 and the die 10. In addition, the punch 40 may descend toward the sub die 30, and thus, a portion of the inside of the pouch film 100 may be fixed between the punch 40 and the sub die 30. Here, the top surface of the die 10 and the top surface of the sub die 30 may be disposed on the same horizontal plane, and the bottom surface of the punch 40 and the bottom surface of the stripper 20 may be disposed on the same horizontal plane. Thus, the pouch film 100 may be fixed while maintaining its flat state as much as possible.

Referring to FIG. 2, the sub punch 50 may press the pouch film 100 between the inner circumference of the first opening 12 and the outer circumference of the sub die 30 through a space between the inner circumference of the second opening 22 and the outer circumference of the punch 40. This may be called the primary molding, and a recess part 110 may be defined in the pouch film 100 through the primary molding. The recess part 110 may have a first depth d1.

Thereafter, referring to FIG. 3, the sub die 30 may descend. As a result, a portion of the pouch film 100 that is fixed between the sub die 30 and the punch 40 may be released. In more detail, the sub die 30 may descend so that a top surface of the sub die 30 is disposed on the same horizontal plane as the top surface of the protrusion 14. In addition, the sub punch 50 may ascend. In more detail, the sub punch 50 may ascend so that a bottom surface of the sub punch 50 is disposed on the same horizontal plane as the bottom surface of the punch 40.

Thereafter, referring to FIG. 4, the punch 40 and the sub punch 50 may descend together to press the pouch film 100. Here, the sub punch 50 may press the pouch film 100 up to a depth at which the pouch film 100 is in contact with the protrusion 14, and the punch 40 may press the pouch film 100 up to a depth at which the pouch film 100 is in contact with the sub die 30.

This may be referred to as the secondary molding, and the recess part 110 that is previously molded in the pouch film 100 through the secondary molding may be spread to mold the cup part 120. The cup part 120 may have a second depth d2 that is greater than the first depth d1 of the recess part 110.

Thereafter, referring to FIG. 5, the punch 40 and the sub punch 50 may ascend to return to their initial positions. In addition, although not shown in the drawing, the stripper 20 may also ascend, and the pouch film 100 fixed between the die 10 and the stripper 20 may be released.

Due to this series of processes, the molding of the cup part 120 on the pouch film 100 may be completed. In the related art, the cup part is molded by the pressing once, but in this case, only a specific area of the pouch film is excessively stretched, and thus, the depth of the cup part is limited to prevent cracks from occurring. On the other hand, in the present invention, since the pouch film 100 is molded multiple times so that the area of the pouch film, which is not stretched in the related art, is also stretched, there is an advantage in that the cup part 120 is more deeply molded.

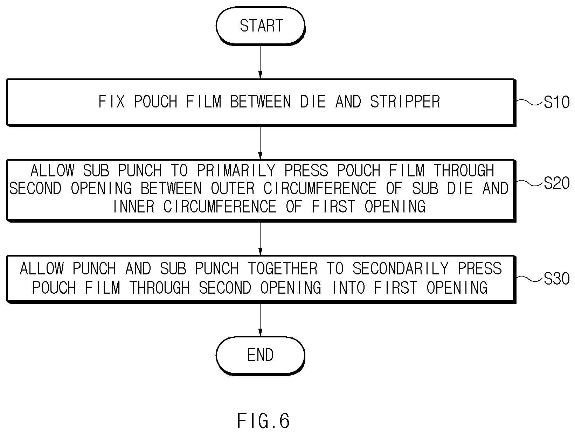

FIG. 6 is a flowchart of a molding method according to another embodiment of the present invention.

Hereinafter, a molding method for molding a pouch film 100 using the molding apparatus described above will be described as another embodiment of the present invention.

The molding method according to another embodiment of the present invention may include a process (S10) of fixing the pouch film 10 between a die 10 and a stripper 20 (hereinafter, referred to as a 'fixing process'), a process (S20) of allowing a sub punch 50 to primarily press the pouch film 100 between an outer circumference of a sub die 30 and an inner circumference of a first opening 12 (hereinafter, referred to as a 'primary molding process'), and a process (S30) of allowing the punch 40 to secondarily press the pouch film 100 together with the sub punch 50 (hereinafter, referred to as a 'secondary pressing process').

In each of the processes (S10, S20, and S30), the previous description of the operation of the molding apparatus may be cited. In more detail, the fixing process (S10) may cite the content described with reference to FIG. 1, the primary molding process (S20) may cite the content described with reference to FIGS. 2 and 3, and the secondary pressing process (S30) may cite the content described with reference to FIGS. 4 and 5. Hereinafter, main features will be briefly described.

In the fixing process (S10) and/or the primary molding process (S20), a top surface of the sub die 30 may be disposed on the same plane as a top surface of the die 10. In the fixing process (S10) and/or the primary molding process (S20), the pouch film 100 may be fixed between the sub die 30 and the punch 40.

In the primary molding process (S20), the sub punch 50 may mold a recess part 110 having a first depth d1 in the pouch film 100.

In the second molding process (S30), the punch 40 and the sub punch 50 may mold the cup part 120 having a second depth d2 that is greater than a first depth d1 in the pouch film 100. In the second pressing process (S30), the recess part 110 may be spread and molded into the cup part 120. In the second pressing process (S30), the sub punch 50 may press the pouch film 100 to a depth at which the pouch film 100 is in contact with a protrusion 14.

In the second pressing process (S30), a bottom surface of the punch 40 may be disposed on the same plane as a bottom surface of the sub punch 50. In the second pressing process (S30), a top surface of the sub die 30 may be disposed on the same plane as a top surface of the protrusion 14.

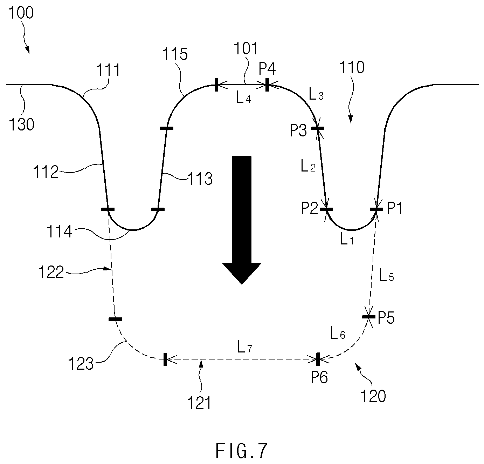

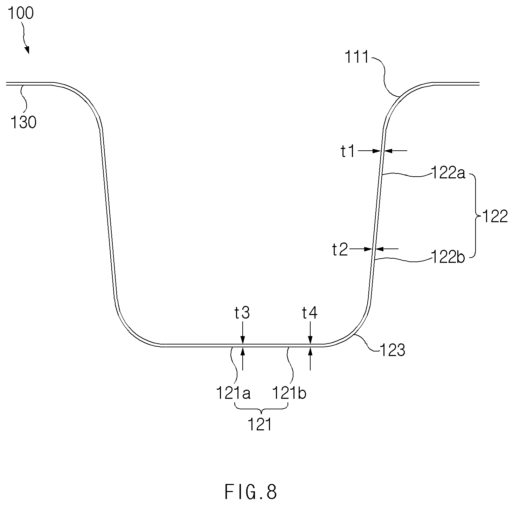

FIG. 7 is a schematic view illustrating a process of manufacturing a pouch type battery case according to further another embodiment of the present invention, and FIG. 8 is a cross-sectional view of the pouch type secondary battery according to an embodiment of the present invention. In FIG. 7, a solid line represents the recess part 110, and a dotted line represents the cup part 120.

Hereinafter, a pouch type battery case manufactured by the molding apparatus or molding method described above will be described as another embodiment of the present invention.

A pouch type battery case (hereinafter, 'battery case') according to another embodiment of the present invention may include a cup part 120 having a recessed shape and a terrace 130 disposed around the cup part 120.

The cup part 120 may define a space for accommodating an electrode assembly (not shown). The terrace 130 may be a portion of the pouch film 100, which is fixed between a die 10 and a stripper 20 and in which the cup part 120 is not molded.

In a process of manufacturing the battery case, the recess part 110 may be molded primarily, the recess part 110 may be spread, and the cup part 120 having a depth that is greater than that of the recess part 110 may be molded secondarily.

The recess part 110 may include an outer circumferential portion 112, an inner circumferential portion 113, and a connection portion 114.

The outer circumferential portion 112 may be connected to the terrace 130 through a die edge 111. The die edge 111 may be formed to be round. In more detail, the die edge 111 may have a predetermined curvature radius. The die edge 111 may be formed by an edge 11 of the die 10 (see FIG. 1) and may have a radius curvature corresponding to that of the edge 11 of the die 10.

The inner circumferential portion 113 may be connected to a central portion 101 through a connection edge 115. The central portion 101 may be a portion, which is fixed between the punch 40 and the sub die 30 in the primary molding of the pouch film 100 and in which the recess part 110 is not formed. The connection edge 115 may be formed to be rounded. In more detail, the connection edge 115 may have a predetermined curvature radius. The connection edge 115 may be formed by the edge 31 of the sub die 30 (see FIG. 1) and may have a radius curvature corresponding to that of the edge 31 of the sub die 30.

The connection portion 114 may connect the outer circumferential portion 112 to the inner circumferential portion 113. The connection portion 114 may have a shape corresponding to that of the bottom surface of the sub punch 50.

In the primary molding of the pouch film 100, the terrace 130 and the central portion 101 may not be stretched, and thus, a remaining thickness may be thick and may be the same as the thickness of the pouch film 100.

Since the connection portion 114 is directly pressed by the sub punch 50, the connection portion 114 may be relatively stretched, and its remaining thickness may be thin. In addition, the outer circumferential portion 112 and the inner circumferential portion 113 may be stretched relatively less than the connection portion 114. The die edge 111 and the connection edge 115 may also be stretched to the same or similar degree as each of the outer circumferential portion 112 and the inner circumferential portion 113.

Thus, a thickness of each of the outer circumferential portion 112, the inner circumferential portion 113, the die edge 111, and the connection edge 115 may be greater than that of the connection portion 114 and may be less than that of each of the terrace 130 and the central portion 101.

In the secondary molding of the pouch film 100, the outer circumferential portion 112 of the recess part 110 may form a first circumferential portion 122a, which is a portion of the circumferential portion 122 of the cup part 120. In addition, the connection portion 114, the inner circumferential portion 113, the connection edge 115, and the central portion 101 of the recess part 110 may form a second circumferential portion 122b, a base portion 121, and a punch edge 123, which are other portions of the circumferential portion of the cup part 120.

Thus, based on a cross-sectional view as illustrated in FIG. 7, when, in the recess part 110, a length of the connection portion 114 is L1, a length of the inner circumferential portion 113 is L2, a length of the connection edge 115 is L3, and a length of the central portion 101 is L4, and in the cup part 120, a length of the second circumferential portion 122b is L5, a length of the punch edge 123 is L6, and a length of the base portion 121 is L7, the following conditional expression: (L1+L2+L3)+L2 = 2*(L5+L7)+L6 may be satisfied.

The reference symbol L1 that is the length of the connection portion 114 may refer to a length from a boundary P1 between the outer circumferential portion 112 and the connection portion 114 to a boundary P2 between the connection portion 114 and the inner circumferential portion 113. The reference symbol L2 that is the length of the inner circumferential portion 113 may refer to a length from the boundary P2 between the connection portion 114 and the inner circumferential portion 113 to a boundary P3 between the inner circumferential portion 113 and the connection edge 115. The reference symbol L3 that is the length of the connection edge 115 may refer to a length from the boundary P3 between the inner circumferential portion 113 and the connection edge 115 to a boundary P4 between the connection edge 115 and the central portion 101. The reference symbol L4 that is the length of the central portion 101 may refer to a length between boundaries between both the connection edges 115 and the central portion 101. The reference symbol L5 that is the length of the second circumferential portion 122b may refer to a distance from the boundary P1 between the outer circumferential portion 112 and the connection portion 114 to a boundary P5 between the second circumferential portion 122b and the punch edge 123. The reference symbol L6 that is the length of the punch edge 123 may refer to a distance from the boundary P5 between the second circumferential portion 122b and the punch edge 123 to a boundary P6 between the punch edge 123 and the base 121. The reference symbol L7 that is the length of the base portion 121 may refer to a length between boundaries P6 between both the punch edges 123 and the base portion 121.

Since the recess part 110 is spread to form the cup 120, a thickness of each portion of the cup 120 may be different from that of the cup part formed in a conventional manner. Hereinafter, the cup part 120 will be described with reference to FIGS. 7 and 8.

The cup part 120 may include a base portion 121 and a circumferential portion 122.

The circumferential portion 122 of the cup part 120 may be connected to the terrace 130 and the die edge 111. The die edge 111 may be maintained in a state in which it has been formed when the previous recess part 110 is molded.

The base portion 121 of the cup part 120 may be connected to the circumferential portion 122 and the punch edge 123. The punch edge 123 may be formed to be rounded. In more detail, the punch edge 123 may have a predetermined curvature radius. The punch edge 123 may be formed by the edge 51 of the sub punch 50 (see FIG. 1) and may have a curvature radius corresponding to that of the edge 51 of the sub punch 50.

The circumferential portion 122 of the cup part 120 may include a first circumferential portion 122a, which is connected to the terrace 130 through the die edge 111, and a second circumferential portion 122b, which is connected to the base portion 121 through the punch edge 123 and has a thickness less than that of the first circumferential portion 122a.

The first circumferential portion 122a may correspond to the outer circumferential portion 112 of the recess part 110, and the second circumferential portion 122b may correspond to the connection portion 114 of the recess part 110. That is, the outer circumferential portion 112 may form the first circumferential portion 122a, and the connection portion 114 may be spread to form the second circumferential portion 122b. As described above, a remaining thickness of the connection portion 114 may be less than a remaining thickness of the outer circumferential portion 112, and thus, a thickness t2 of the second circumferential portion 122b may be relatively less than a thickness of the first circumferential portion 122a.

The base portion 121 of the cup part 120 may include a first base portion 121a disposed at a center thereof and a second base portion 121b having a thickness less than that of the first base portion 121a and connected to the circumferential portion 122 through the punch edge 123.

The first base portion 121a may correspond to the central portion 101, and the second base portion 121b may correspond to the inner circumferential portion 113 and the connection edge 115 of the recess part 110. That is, the central portion 101 may form the first base portion 121a, and the inner circumferential part 113 and the connection edge 115 may be spread to form the second base portion 121b. As described above, a remaining thickness of each of the inner circumferential part 113 and the connection edge 115 may be less than that of the central portion 101, and thus, a thickness t4 of the second base portion 121b may be relatively less than that of the first base portion 121a.

In addition, a thickness t2 of the second circumferential portion 122b may be less than that of the second base portion 121b. This is because, as described above, the remaining thickness of the connection portion 114 is less than that of each of the inner circumferential portion 113 and the connection edge 115.

In addition, the thickness t1 of the first circumferential portion 122a may be less than the thickness t3 of the first base portion 121a. This is because, as described above, the remaining thickness of the outer circumferential portion 112 is less than that of the central portion 101.

The thickness of the punch edge 123 may vary depending on a length ratio of the connection portion 114 and the inner circumferential portion 113, This is because the connection portion 114 or the inner circumferential portion 113 forms the punch edge 123, and as described above, the remaining thickness of the connection portion 114 is less than that of the inner circumferential portion 113.

As a first example, when the connection portion 114 is sufficiently long, the connection portion 114 may be spread to form not only the second circumferential portion 122b but also the punch edge 123. The inner circumferential portion 113 may be spread to form the second base portion 121b. In this case, the thickness of the punch edge 123 may be the same as the thickness t2 of the second circumferential portion 122b and may be less than the thickness t4 of the second base portion 121b. In addition, the punch edge 123 may connect the second circumferential portion 122b to the second base portion 121b.

As a second example, when the connection portion 114 is less than that in the first example, the connection portion 114 may be spread to form the second circumferential portion 122b, and the inner circumferential portion 113 may be spread to form the punch edge 123 and the second base portion 121b. In this case, the thickness of the punch edge 123 may be the same as the thickness t4 of the second base portion 121b and may be greater than the thickness t2 of the second circumferential portion 122b. In addition, the punch edge 123 may connect the second circumferential portion 122b to the second base portion 121b.

As a third example, when the connection portion 114 is less than that in the second example, the connection portion 114 may be spread to form the second circumferential portion 122b, and the inner circumferential portion 113 may be spread to form the third circumferential portion, the punch edge 123, and the second base portion 121b. The third circumferential portion may be a portion between the second circumferential portion 122b and the punch edge 123. That is, the circumferential portion 122 of the cup part 120 may further include the third circumferential portion that is connected to the second circumferential portion 122b and has a thickness greater than that of the second circumferential portion 122b.

In this case, the thickness of the punch edge 123 may be the same as the thickness t4 of each of the third circumferential portion and the second base portion 121b and may be greater than the thickness t2 of the second circumferential portion 122b. In addition, the punch edge 123 may connect the third circumferential portion to the second base portion 121b.

When summarizing the first to third examples, the thickness of the punch edge 123 may be the same as the thickness t2 of the second circumferential portion 122b or the thickness t4 of the second base portion 121b. In addition, the thickness of the punch edge 123 may be less than the thickness t4 of the second base portion 121b or greater than the thickness t2 of the second circumferential portion 122b.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being comprised in the present invention.

**[Description of the Symbols]**

| | | | |
|---|---|---|---|
| 10 : | Die | 12: | First opening |
| 14: | Protrusion | 20: | Stripper |
| 22: | Second opening | 30: | Sub die |
| 40: | Punch | 50: | Sub punch |
| 100: | Pouch film | 101: | Central portion |
| 110: | Recess part | 111: | Die edge |
| 112: | Outer circumferential portion | 113: | Inner circumferential portion |
| 114: | Connection portion | 115: | Connection edge |
| 120: | Cup part | 121: | Base portion |
| 121a: | First base portion | 121b: | Second base portion |
| 122: | Circumferential portiontion | 122a: | First circumferential portion |
| 122b: | Second circumferential portion | 130: | Terrace |

Preferred examples of the Invention are specified in the following items:
Item 1. A molding apparatus for molding a pouch film, the molding apparatus comprising:
   a die in which a first opening is defined;
   a stripper disposed above the die to fix the pouch film and having a second opening;
   a sub die having a height that is variable with respect to the die inside the first opening;
   a punch configured to press the pouch film through the second opening and disposed to face the sub die; and
   a sub punch configured to press the pouch film between an inner circumference of the first opening and an outer circumference of the sub die through a space between an inner circumference of the second opening and an outer circumference of the punch.
Item 2. The molding apparatus of Item 1, wherein the sub punch is configured to primarily press the pouch film in a state in which a top surface of the sub die and a top surface of the die are disposed on the same plane, and
   the punch and the sub punch are configured to secondarily press the pouch film in a state in which the top surface of the sub die is disposed below the top surface of the die.
Item 3. The molding apparatus of Item 1, wherein the sub punch is disposed to surround the outer circumference of the punch.
Item 4. The molding apparatus of Item 1, wherein a protrusion protruding from the inner circumference of the first opening toward the outer circumference of the sub die and overlapping the sub punch in a vertical direction is disposed on the die.
Item 5. A molding method for molding a pouch film, the molding method comprising:
   fixing the pouch film between a die, in which a first opening is formed, and a stripper, in which a second opening is formed;
   allowing a sub punch to primarily press the pouch film through the second opening between an outer circumference of a sub die disposed in the first opening and an inner circumference of the first opening; and
   allowing a punch disposed to face the sub die with the pouch film therebetween to secondarily press the pouch film toward the first opening through the second opening together with the sub punch.
Item 6. The molding method of Item 5, wherein, in the fixing and/or the primary pressing, a top surface of the sub die is disposed on the same plane as a top surface of the die. Item 7. The molding method of Item 5, wherein, in the fixing and/or the primary pressing, the pouch film is fixed between the sub die and the punch.
Item 8. The molding method of Item 5, wherein, in the secondary pressing, a bottom surface of the punch is disposed on the same plane as a bottom surface of the sub punch.
Item 9. The molding method of Item 5, wherein, in the primary pressing, the sub punch molds a recess part having a first depth in the pouch film, and
   in the secondary pressing, the punch and the sub punch mold a cup part having a second depth greater than the first depth in the pouch film.
Item 10. The molding method of Item 9, wherein, in the secondary pressing, the recess part is spread to be molded into the cup part.
Item 11. The molding method of Item 5, wherein a protrusion protruding from an inner circumference of the first opening toward an outer circumference of the sub die is formed on the die, and
   in the secondary pressing, the sub punch presses the pouch film to a depth at which the pouch film is in contact with the protrusion.
Item 12. The molding method of Item 11, wherein, in the secondary pressing, a top surface of the sub die is disposed on the same plane as a top surface of the protrusion.
Item 13. A pouch type battery case comprising:
   a cup part having a recessed shape; and
   a terrace disposed on a circumference of the cup part,
   wherein a circumferential portion of the cup part comprises:
      a first circumferential portion connected to the terrace through a die edge; and
      a second circumferential portion connected to the first circumferential portion and having a thickness less than that of the first circumferential portion.
Item 14. The pouch type battery case of Item 13, wherein a base portion of the cup part comprises:
   a first base portion disposed at a center thereof; and
   a second base portion having a thickness less than that of the first base portion and connected to the circumferential portion of the cup part through a punch edge. Item 15. The pouch type battery case of Item 14, wherein a thickness of the second circumferential portion is less than that of the second base portion.
Item 16. The pouch type battery case of Item 14, wherein a thickness of the first circumferential portion is less than that of the first base portion.
Item 17. The pouch type battery case of Item 14, wherein a thickness of the punch edge connecting the second circumferential portion to the second base portion is the same as that of the second base portion or the second circumferential portion.
Item 18. The pouch type battery case of Item 14, wherein a thickness of the punch edge connecting the second circumferential portion to the second base portion is the same as that of the second circumferential portion and less than that of the second base portion.
Item 19. The pouch type battery case of Item 14, wherein a thickness of the punch edge connecting the second circumferential portion to the second base portion is the same as that of the second base portion and greater than that of the second circumferential portion.
Item 20. The pouch type battery case of Item 14, wherein the circumferential portion of the cup part further comprises a third circumferential portion connected to the second circumferential portion and having a thickness greater than that of the second circumferential portion, and
   a thickness of the punch edge connecting the third circumferential portion to the second base portion is the same as that of each of the third circumferential portion and the second base portion and greater than that of the second circumferential portion.

## Claims

1. A pouch type battery case comprising:
a cup part having a recessed shape; and
a terrace disposed on a circumference of the cup part,
wherein a circumferential portion of the cup part comprises:
a first circumferential portion connected to the terrace through a die edge; and
a second circumferential portion connected to the first circumferential portion and having a thickness less than that of the first circumferential portion,
wherein a base portion of the cup part comprises:
a first base portion disposed at a center thereof; and
a second base portion having a thickness less than that of the first base portion and connected to the circumferential portion of the cup part through a punch edge.

2. The pouch type battery case of claim 1, wherein a thickness of the second circumferential portion is less than that of the second base portion.

3. The pouch type battery case of claim 1, wherein a thickness of the first circumferential portion is less than that of the first base portion.

4. The pouch type battery case of claim 1, wherein a thickness of the punch edge connecting the second circumferential portion to the second base portion is the same as that of the second base portion or the second circumferential portion.

5. The pouch type battery case of claim 1, wherein a thickness of the punch edge connecting the second circumferential portion to the second base portion is the same as that of the second circumferential portion and less than that of the second base portion.

6. The pouch type battery case of claim 1, wherein a thickness of the punch edge connecting the second circumferential portion to the second base portion is the same as that of the second base portion and greater than that of the second circumferential portion.

7. The pouch type battery case of claim 1, wherein the circumferential portion of the cup part further comprises a third circumferential portion connected to the second circumferential portion and having a thickness greater than that of the second circumferential portion, and
a thickness of the punch edge connecting the third circumferential portion to the second base portion is the same as that of each of the third circumferential portion and the second base portion and greater than that of the second circumferential portion.
